# EUROPÄISCHE PATENTSCHRIFT

(11) **EP 1 178 914 B1**
(45) Veröffentlichungstag und Bekanntmachung des Hinweises auf die Patenterteilung: **05.02.2003**
(21) Anmeldenummer: 00943617.1
(22) Anmeldetag: 17.05.2000
(51) Int. Cl.: B62D 25/12

(54) **FRONTHAUBENANORDNUNG**
FRONT HOOD ASSEMBLY
ENSEMBLE CAPOT AVANT

(30) Priorität: 17.05.1999 DE 19922107; 08.10.1999 DE 19948461; 08.10.1999 DE 19948460
(43) Veröffentlichungstag der Anmeldung: 13.02.2002
(73) Patentinhaber: Edscha AG, 42855 Remscheid (DE)
(72) Erfinder: POLZ, Andreas, D-45881 Gelsenkirchen (DE); SCHLEGEL, Peter, D-42327 Wuppertal (DE); SCHNEPPENHEIM, Jörg, D-82110 Germering (DE)
(74) Vertreter: Sparing, Rolf Klaus
(86) Internationale Anmeldenummer: DE0001598
(87) Internationale Veröffentlichungsnummer: WO00069704

(56) Entgegenhaltungen:
- EP-A- 0 509 690
- PATENT ABSTRACTS OF JAPAN vol. 2000, no. 01, 31. Januar 2000 (2000-01-31) & JP 11 291948 A (HONDA MOTOR CO LTD), 26. Oktober 1999 (1999-10-26)
- PATENT ABSTRACTS OF JAPAN vol. 016, no. 557 (M-1340), 27. November 1992 (1992-11-27) & JP 04 212677 A (NISSAN MOTOR CO LTD), 4. August 1992 (1992-08-04)

## Beschreibung

Die Erfindung betrifft eine Fronthaubenanordnung nach dem Oberbegriff des Anspruchs 1.

Aus der Praxis sind inzwischen zahlreiche Sicherheitseinrichtungen wie Airbag und dgl. für Insassen von Personenkraftwagen bekannt. Dagegen sind Schutzmaßnahmen für Fußgänger, die vom Bug einen Personenkraftwagen erfaßt werden, bisher kaum vorgeschlagen oder praktisch umgesetzt worden. Als besonders problematisch erweisen sich Unfälle mit Fußgängern, die bei Geschwindigkeiten bis zu 60 km/h erfolgen, da der Fußgänger, wenn er frontal erfaßt wird, oft mit dem Kopf auf die Motorhaube des Personenkraftwagen aufschlägt und an dieser Verletzung stirbt. Die Schwere der Verletzung ergibt sich dadurch, daß die zumeist aus dünnem Blech ausgebildete Front- bzw. Motorhaube zwar dazu neigen würde, sich zu verbiegen, es aber zu einem Aufschlag auf unter der Motorhaube angeordneten, praktisch nicht oder nur schwer deformierbaren Teilen wie dem Motorblock, dem Federbeindohm, dem Luftfilter, dem Ventildeckel oder den Längs- und Querträgem des Fahrzeugs kommt. Es wäre wünschenswert, wenn der Aufprall insbesondere des Kopfes eines Fußgängers, in seinen Folgen abgemildert werden könnte. Bei Geschwindigkeiten über 60 km/h wird dagegen der Fußgänger, nachdem er erfaßt wurde, über das Fahrzeug geschleudert.

DE-C-29 22 893 schlägt vor, die Motorhaube und den Kotflügel im Bereich der zwischen diesen beiden Teilen gebildeten Fuge mit entlang der beiden Teile verlaufenden, energieabsorbierenden U-Profilen auf Aufbauteilen abzustützen, die im Falle eines Zusammenpralls den Aufprall in Deformationsenergie umwandeln. Nachteilig bei dieser Anordnung ist einerseits, daß schon erhebliche Kräfte auf die Profile einwirken müssen, um diese zu verbiegen. Zudem sind diese sonst nutzlosen U-Profile kostspielig in der Anschaffung und aufwendig zu montieren.

DE-A-27 37 876 beschreibt eine Aufprallschutzvorrichtung, die ein netzartiges Auffangelement mittels einer vorgespannten Schwenkklappe aus einer Ruheposition, in der das Netz im wesentlichen an der Fronthaube anliegt, in eine Auffangposition verlagert, welche im wesentlichen vor der Windschutzscheibe des Kraftfahrzeugs verläuft. Diese Einrichtung dient mehr der Windschutzscheibe als dem Schutz des Fußgängers vor einem zu harten Aufprall auf die Fronthaube. Außerdem kann jede Berührung des die Schwenkbewegung auslösenden, in der vorderen Stoßstange integrierten Sensors das Netz dazu veranlassen, ausgelöst zu werden, wodurch eine Vielzahl von Konstellationen eintreten, in denen das Netz dem Fahrer die gesamte Sicht nimmt.

DE-A-28 41 315 beschreibt eine Sicherheitseinrichtung, bei der in Reaktion auf ein Signal eines im Frontbereich eines Fahrzeugs angeordneten Sensors zur Erfassung einer Kollision mit einem Fußgänger die Fronthaube aus einer Ruheposition in eine demgegenüber angehobene Aufprallposition durch eine Kolben-Zylinder-Einheit verlagert wird, wobei die Verlagerung durch einen Energiespeicher erfolgt. Beim Anheben wird die Fronthaube um eine an der Stirnseite des Fahrzeugs angeordnete horizontale Drehachse verschwenkt.

DE-A-197 10 417 beschreibt eine Anordnung zum Anheben der Fronthaube, bei der eine Verschwenkung um eine an der Stirnseite des Fahrzeugs angeordnete horizontale Drehachse durch dieselbe Gasfeder ausgelöst wird, die auch das Anheben der an der anderen Ende angelenkten Fronthaube unterstützt.

DE-A-197 21 565 beschreibt eine Sicherheitseinrichtung an Kraftfahrzeugen zum Anheben der Fronthaube, bei der das Anheben der Fronthaube geschwindigkeitsabhängig durch einen mit dem Haubenschloß integrierten Mechanismus erfolgt. Hierzu wird entweder die üblicherweise aus Sicherheitsgründen aus der Fahrerkabine ausgelöste Entriegelung des mit einer Druckfeder beaufschlagten Schlosses durch einen Sensor, der durch einen Aufprall ausgelöst wird, ausgelöst, oder alternativ hierzu insbesondere bei höheren Geschwindigkeiten eine in den Schließbolzen der Haubenschlosses integrierte Kolben-Zylinder-Einheit durch eine Treibladung expandiert. Nachteil dieser Anordnung ist zunächst, daß die zum Schließen der Fronthaube erforderliche Kraft einen bestimmten Schwellenwert nicht übersteigen darf, um dem Fahrer zu erlauben, die Fronthaube bequem zu schließen. Da die auftreffenden Kräfte bei einem Personenunfall bedeutend sind, wird die Fronthaube schnell herabgedrückt und es kommt zu den bekannten Personenschäden insbesondere im Kopfbereich. Auch das Vorsehen einer Treibladung zum Expandieren Kolben-Zylinder-Einheit ist problematisch, da deren Haltbarkeit, insbesondere bei wenig geschützter Anordnung, begrenzt und der Austausch problematisch ist. Außerdem besteht die Gefahr, daß Druckfeder und die Kolben-Zylinder-Einheit gleichzeitig ausgelöst werden, wodurch die Öffnung der Fronthaube so groß werden würde, daß der Fahrtwind die Haube gegen die Windschutzscheibe in Anlage bringt und dem Fahrer die Sicht versperrt.

DE-A-27 11 338 beschreibt eine Einrichtung zum Dämpfen des Aufpralls eines Fußgängers, bei der ein Luftsack im Bereich des Windlaufs angeordnet ist, dessen Befüllung durch eine Sensorsignal ausgelöst wird. Dabei kann der Luftsack so angeordnet sein, daß er zugleich einen Teil der Fronthaube anhebt, wobei er hierzu eine Federkraft überwindet, die zwei über einen Drehpunkt miteinander verbundene Lenker, von denen einer drehbar an der Fronthaube und der andere drehbar an einem festen Teil des Kraftfahrzeugs angeordnet ist, in eine angewinkelte Lage vorspannt. Ferner wird vorgeschlagen, nachgiebige Profilkörper in Streifenform in der Art einer Dichtung zwischen Haube und Seitenteilen anzuordnen, um damit einen weiteren Schutz beim Aufprall zu schaffen.

DE-A-27 11 339 beschreibt eine an der Frontseite angelenkte Fronthaube, bei der die Anlenkung derart nachgiebig ausgebildet ist, daß sie eine horizontale Verschiebung der Fronthaube durch den Anprall eines Fußgängers zuläßt, wobei die nach hinten verlagerte Fronthaube an der hinteren Seite mit einem Ende eines starren Verriegelungselements verbunden ist, dessen anderes Ende bei Verschiebung der Fronthaube nach hinten in einer Führungskurve derart nach oben und nach hinten verlagert wird, daß die Fronthaube eine Bewegung nach oben ausführt. Dieses Anheben funktioniert nur unter der Voraussetzung, daß es tatsächlich zu einer horizontalen Verlagerung der Fronthaube kommt, was beispielsweise beim Aufprall von Kindern nicht immer gewährleistet ist.

EP-A-0 509 690 beschreibt eine gattungsgemäße Fronthaube, die an ihrer Vorderseite derart an der Fahrzeugstruktur angelenkt ist, daß aufgrund eines Anpralls die Fronthaube nach hinten verlagert wird, wobei die an der hinteren Seite angeordneten Verschluß- bzw. Schwenkmittel aufgrund einer Bewegung der Fronthaube nach hinten eine Schwenkbewegung der Fronthaube nach oben auslösen, so daß der Deformationsweg der Haube unter dem Aufprall eines Fußgängers vergrößert wird. Die Schwenkbewegung wird beispielsweise durch ein Viergelenkscharnier geführt, das sonst zur Verschwenkung der Fronthaube eingesetzt wird, wenn der Zugang zum Motor und anderen Teilen freigegeben werden soll. Auch hier tritt ein Anheben der Fronthaube erst mit sehr kräftigem Verlagern der Fronthaube ein, während ein schwacher Aufprall die Fronthaube nicht nach hinten und somit auch nicht nach oben verlagert.

DE-C-30 47 969 beschreibt eine Fronthaubenanordnung, bei der zwischen der Fronthaube und der Karosserie außerhalb der Scharniere Deformationsglieder ausgebildet sind, die bei Aufprall eines Fußgängers auf die Fronthaube nachgiebig den Aufprall dämpfen.

DE-A-197 12 961 beschreibt die Anordnung einer Fronthaube an einem Fahrzeug, bei der ein Scharnier auf einem Scharnierträger angeordnet ist, welcher Scharnierträger im Falle eines aufprallenden Fußgängers nach oben verschwenkt wird, um die Fronthaube anzuheben. Problematisch ist bei dieser Anordnung, daß das Haubenschloß für die Fronthaube eine Schwenkachse festlegt, die keine wahlfreie Verlagerung des Scharnierträgers zuläßt, weshalb der beschriebene Scharnierträger beispielsweise blockiert.

Insgesamt ist noch keine Lösung vorgeschlagen worden, die eine kostengünstige und nach einem Einsatz leicht wiederherstellbare Anordnung vorschlägt, welche konstruktiv so ausgereift ist, daß sie in Serienfahrzeugen eingesetzt werden könnte.

Es ist die Aufgabe der Erfindung, eine Fronthaubenanordnung nach dem Oberbegriff des Anspruchs 1 vorzuschlagen, die einen kostenmäßig und technisch realisierbaren Fußgängerschutz liefert.

Diese Aufgabe wird bei der eingangs genannten Fronthaubenanordnung erfindungsgemäß mit den kennzeichnenden Merkmalen des Anspruchs 1 gelöst.

Die erfindungsgemäße Fronthaubenanordnung ermöglicht es, bei Aufprall eines Fußgängers die in einem entsprechenden Maß oberhalb der gefährlichen Teile wie Motorblock und dergleichen angeordnete Fronthaube relativ nahe an diesen Teilen anzuordnen, wodurch das Styling des Fahrzeugs nicht unter der höheren Haube zu leiden hat. Ähnlich wie bei Sollbruchstellen sind bei den Scharnieren weiche Elemente eingesetzt, die einer in Lage und Orientierung zielgerichteten Deformation infolge des Aufpralls eines Körpers auf die Fronthaube ermöglichen, wodurch gleichzeitig sichergestellt ist, daß einerseits die Relativbewegung um das eine Schwenkachse der Fronthaube definierende Haubenschloß ermöglicht ist und andererseits die Aufprallenergie in definierte Formänderungsenergie bei der plastischen Verformung der Scharnierelemente umgewandelt wird.

Gemäß einer bevorzugten Weiterbildung der Erfindung ist vorgesehen, daß eine im wesentlichen normal zur Fronthaube angreifende Kraft die Deformation des Scharniers durch Überwindung von geringen Gegenkräften auslöst. während bei einer axialen Druckbeaufschlagung des Fahrzeugs, wie es bei einem frontalen Zusammenstoß mit einem anderen Fahrzeug als Hauptbeanspruchungsrichtung zu erwarten ist, die die Fronthaube tragenden Scharnierelemente im wesentlichen unverändert bzw. plastisch kaum verändert verbleiben, so daß das Crash-Verhalten des Fahrzeugs insgesamt durch die Maßnahme zum Schutz aufprallender Fußgänger nicht herabgesetzt ist.

Zweckmäßigerweise ist die Fronthaube nicht nur an ihrem achterlichen Bereich durch die erfindungsgemäß ausgebildeten Scharniereinheiten gegenüber einer Endposition nach Aufpall eines Fußgängers angehoben, sondern auch das Haubenschloß in einer angehobenen Position, die ein Nachgeben in Reaktion auf den Aufprall eines menschlichen Körpers ermöglicht, angeordnet, wobei der Verlagerungsweg des Haubenschlosses bei der Auslegung der Sollbiegestellen der Scharnierelemente Berücksichtigung findet.

Durch die Auslegung der Scharnierelemente als plastisch veränderbare Verbindungen zwischen Fronthaube und beispielsweise dem Längsträger des Kraftfahrzeugs ist sichergestellt, daß nach Aufprall des menschlichen Körpers kein Rückprall durch die Vorspannung der verbogenen Scharnierelemente den Fußgänger zurück auf die Fahrbahn schleudert, vielmehr wird ein ganz überwiegender Teil der Aufprallenergie in Formänderungsenergie umgewandelt und somit für den Fußgänger abgebaut. Diese starke Energietransformation mildert den Aufprall insbesondere eines Kopfes eines Fußgängers in einer Weise ab, die lebensrettend sein kann, wobei für diese welche Maßnahme nur geringe Investitionskosten aufzuwenden sind.

Es ist möglich, die plastisch deformierbaren Scharnierelemente mit dem Längsträger des Kraftfahrzeugs über ausfahrbare Hubglieder oder dergleichen zu koppeln, die es ermöglichen, daß die Fronthaube bei Detektierung eines Aufpralls beispielsweise durch einen in der Vorderleiste des Fahrzeugs angeordneten Sensor oder durch andere geeignete Mittel nach oben ausgefahren wird, wobei die Fronthaube anschließend mittels plastischer Formänderung der hochgefahrenen Scharnierelemente im wesentlichen zurück in ihre Ausgangslage deformiert wird, wobei der Deformationsweg im einzelnen von der Fahrzeuggeschwindigkeit und der Härte und der Lage des Aufpralls abhängt. Es ist zu beachten, daß im Falle des Einsatzes von solchen Hubgliedern die Zeit, die bis zum Ausfahren der Hubglieder verstreicht, möglichst weniger als 1/10 Sekunde ausmachen soll, damit der maximale Weg bereits zurückgelegt ist, wenn der Fußgänger bzw. sein Kopf aufprallt. Das Ausfahren der Hubglieder kann sowohl durch pneumatische und hydraulische Kolben-Zylinder-Einheiten zu den Einheiten als auch pyrotechnisch oder mechanisch ausgelöst werden.

Der durch die Überhöhung der Fronthaube über den tragenden und massiven Teilen des Motorraums bereitgestellte Deformationsweg sollte wenn möglich 120 mm und mindestens 70 mm ausmachen, um einen ausreichend langen Weg für die Tranformation der Aufprallenergie zu gewährleisten. Hierbei ist zu berücksichtigen, daß die zumeist aus Blech hergestellte Fronthaube bei einem mittigen Aufprall selbst eine starke Deformation erfahren kann und bei einem exzentrischen Aufprall die Inanspruchnahme eines der beiden Fronthaubenscharniere größer sein kann als die des anderen. Es ist aber möglich, bei Vorsehen von starreren Fronthauben, beispielsweise aus glasfaserverstärkten Kunststoffen oder mit einer Verstärkungsmatrix aus Glasfasern, die die Formänderung der Fronthaube selbst herabsetzt, was zunächst die Gefahr des Aufpralls erhöht, die erfindungsgemäße Übertragung der Aufprallenergie auf die Scharniere zu verbessern, so daß eine wesentlich höhere Energie in den Scharnieren vernichtet werden kann und somit im Ergebnis geringere Einbauhöhen ermöglicht werden. Dies spielt insbesondere eine Rolle beim Aufprall von Kindern, der im vorderen Bereich der Fronthaube stattfindet und bei dem der Hebelarm für die Übertragung der Kräfte anders ist als bei einem Erwachsenen.

Ein wesentlicher Vorteil der Ausbildung der Scharniere als plastisch verformbare Teile besteht darin, daß diese Teile mit geringem Aufwand ersetzt werden können, beispielsweise wenn eine versehentliche Auslösung erfolgt ist oder nach dem Aufprall eines Fußgängers. Anders als pyrotechnische Ladungen und dergleichen ist auch nach längerem Einsatz des Fahrzeugs eine plastische Änderung der Scharnierteile möglich. Schließlich ist zu bemerken, daß bei der erfindungsgemäßen Anordnung die Fronthaube in der Regel auch nach Abschluß der Deformation infolge eines Aufpralls geöffnet werden kann, nachdem das Haubenschloß entriegelt wurde, so daß eine rasche Überprüfung des Zustands des Motorraums im Anschluß an einen Aufprall möglich ist.

Es ist möglich, an sich bekannte beliebige Ausgestaltungen von Scharnieren durch Ausführung plastischer Formänderung derart zu gestalten, daß die Fronthaube unter dem Aufprall eines Fußgängers nachgibt und aus einer angehobenen, fahrbereiten Einsatzlage in eine abgesenkte Lage verschwenkt. Ist das Scharnier als Eingelenk ausgestaltet, ist zweckmäßigerweise derjenige Bereich, der an die Karosserie angeschlagen wird, plastisch deformierbar. Bei einer Ausgestaltung als Mehrgelenk, z.B. als Viergelenk, kann ferner ein Lenker oder zweckmäßigerweise auch mehrere oder alle Lenker plastisch deformierbar ausgestaltet sein.

Die plastische Formänderung ist nicht zwangsläufig beschränkt auf das Material der Scharniere selbst. Es ist vielmehr möglich, auch in der Art einer Sollbruchstelle ausgestaltete Energiespeicher mit dem Scharnier zu integrieren, wodurch die plastische Formänderung durch deren Deformation Energie umwandelt. Insbesondere kommen hierfür elongierbare oder abscherbare Teile vorteilhaft zum Einsatz.

Weitere Vorteile und Merkmale der Erfindung ergeben sich auch der nachfolgenden Beschreibung sowie aus den abhängigen Ansprüchen.

Die Erfindung wird im folgenden anhand von Ausführungsbeispielen unter Bezugnahme auf die beigefügten Zeichnungen näher erläutert.
- Fig. 1: zeigt in Seitenansicht die Frontpartie eines Kraftfahrzeugs mit einer erfindungsgemäßen Fronthaubenanordnung.
- Fig. 2: zeigt das Scharnier der Fronthaubenanordnung aus Fig. 1.
- Fig. 3: zeigt ein alternatives Scharnier mit reduziertem Widerstandsmoment für eine erfindungsgemäße Fronthaubenanordnung.
- Fig. 4: zeigt ein alternatives Scharnier mit reduziertem Widerstandsmoment für eine erfindungsgemäße Fronthaubenanordnung.
- Fig. 5: zeigt ein weiteres alternatives Scharnier für eine erfindungsgemäße Fronthaubenanordnung.
- Fig. 6: zeigt ein weiteres alternatives Scharnier für eine erfindungsgemäße Fronthaubenanordnung.
- Fig. 7: zeigt noch ein weiteres alternatives Scharnier für eine erfindungsgemäße Fronthaubenanordnung.

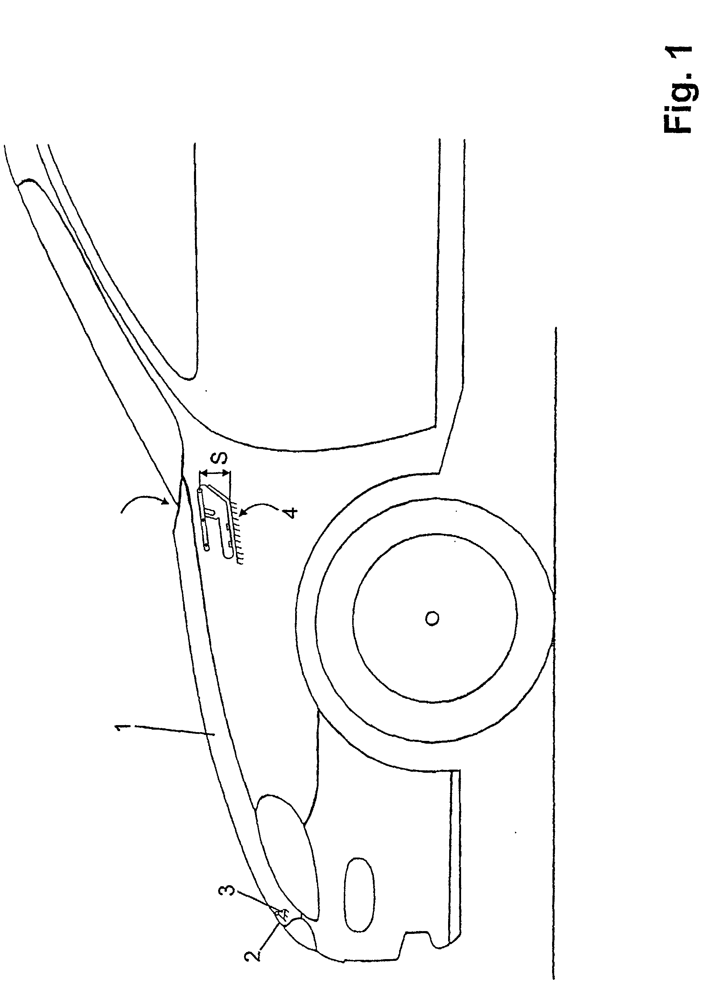

Die in Fig. 1 dargestellte Frontpartie eines Kraftfahrzeugs umfaßt eine Fronthaube 1, die an ihrem vorderen Ende 2 mit einem Haubenschloß 3 verriegelbar ist, und die an ihrem rückwärtigen Ende jeweils außen über eines von zwei Scharnieren 4 mit jeweils einem Längsträger des Kraftfahrzeugs verbunden ist. Das Scharnier 4 weist einen ersten Schenkel 5 auf, der mit der Fronthaube 1 durch Verschraubung oder Vernietung starr verbunden ist, und dessen Gelenk 6 im Betriebszustand den Drehpunkt der Motorhaube 1 bei Entriegelung des Haubenschlosses 3 bildet. Das Gelenk 6 ist in einem karrosserieseitig befestigten Halter 7 befestigt, wobei in dem Halter 7 eine gekrümmte Führung 8 ausgebildet ist, deren Rasten 9 den das Gelenk 6 definierenden Stift bremsend bzw. klemmend halten können. Der karrosserieseitig befestigte Halter 7 umfaßt einen im wesentlichen horizontalen Schenkel 10 und einen im wesentlichen im 45° Winkel und plattenförmig ausgebildeten Schenkel 11, in dem die Führung 8 etwa in Gestalt eines Viertelkreises ausgespart ist. An der Stoßstelle der beiden Schenkel 10 und 11 weist der Halter 7 eine Einkerbung oder Schwächung 12 auf, die im wesentlichen horizontal und senkrecht zur Fahrtrichtung des Kraftfahrzeugs verläuft, und die ein Abbiegen des hinteren Schenkels 11 von dem vorderen Schenkel 10, der fest mit dem Längsträger verschraubt oder vernietet ist, dahingehend zuläßt, daß der Schenkel 11 bis in eine Lage abgebogen werden kann, bei der beide 10, 11 horizontal aufliegen. Um ein Überbiegen und damit ein Abbrechen des Schenkels 11 zu verhindern, sind entsprechende Anschlagmittel vorgesehen.

Die Haltekraft der Rasten 9 reicht aus, das Eigengewicht der Fronthaube 1 beim Öffnen aufzunehmen, ohne eine Verbiegung des karrosserieseitigen Halters 7 auszulösen. Die auf das Gelenk 6 wirkenden Kräfte liegen in einem solchen Fall in der Größenordnung von ca. 400 N entsprechend einem Gewicht von bis zu 40 Kg, die sich nochmals auf beide Scharniere 4 verteilen und somit halbieren. Beim Aufprall eines Körpers wirkt auf die Fronthaube 1 eine Gewichtskraft von 2.000 N bis 5.000 N, die sich je nach Lage des Aufpralls gleichmäßig oder ungleichmäßig auf die beiden Scharniere 4 verteilt. Diese mit dem Pfeil F angedeutete Kraft, die das Gelenk 6 und damit den Schenkel 11 nach unten drückt, reicht aus, um die Sollbiegestelle 12 aufzuspreizen und eine Schwenkbewegung des zweiten Schenkels 11 auszuführen. Die mit dem anderen Pfeil G angedeutete Schwenkbewegung des Schenkels 11 resultiert hieraus, wobei das Gelenk 6 in der rastenförmigen Führung 8 entsprechend dem Schwenkradius um das Haubenschloß 3 definiert nach unten verlagert wird. Ein Großteil der Aufprallenergie wird in Deformationsarbeit an der Stoßstelle 12 der Schenkel 10 und 11 umgewandelt, wobei zusätzlich vorgesehen sein kann, daß die Rasten progressiv zunehmend das Gelenk 6 klemmen und somit ebenfalls Aufprallenergie umwandeln.

Wie leicht erkannt wird, nimmt der Beanspruchungshebel um die Einkerbung 12, mit dem die Kraft F an dem Schenkel 11 angreift, mit zunehmendem Deformationsweg ab und erfordert somit für weitere plastische Formänderungen durch Verbiegen des Schenkels 11 progressiv zunehmende Kräfte. Es ist also gewährleistet, daß in einer ersten Phase des Aufpralls eine starke Deformation über die Zeit allmählich abnimmt. Gleichzeitig ist durch die plastische Formänderung sichergestellt, daß es nicht zu einer Rückfederung und somit einem Abwerfen des aufprallenden Fußgängers von der Fronthaube 1 kommt. Die Mindestkraft F, bei der eine erste Deformation des Scharniers 4 ausgelöst wird, kann so bestimmt sein, daß der Aufprall eines Kinderkopfes im vorderen Bereich der Fronthaube 1 bereits eine erhebliche Deformation des Scharniers 4 auslöst, während beispielsweise der Aufprall eines Erwachsenenkopfes im hintere Bereich der Fronthaube, der eine wesentlich höhere Energie aufweist, im wesentlichen die vollständige Deformation (Weg S) der beiden Scharnierelemente nach sich zieht.

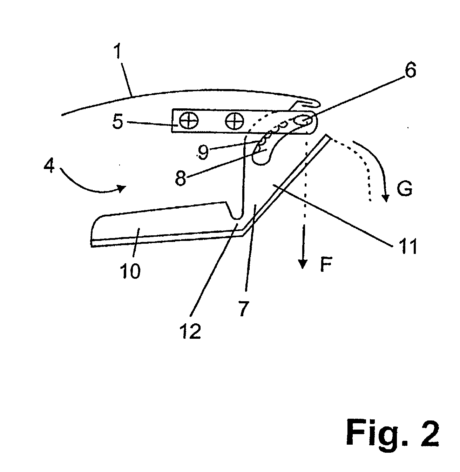

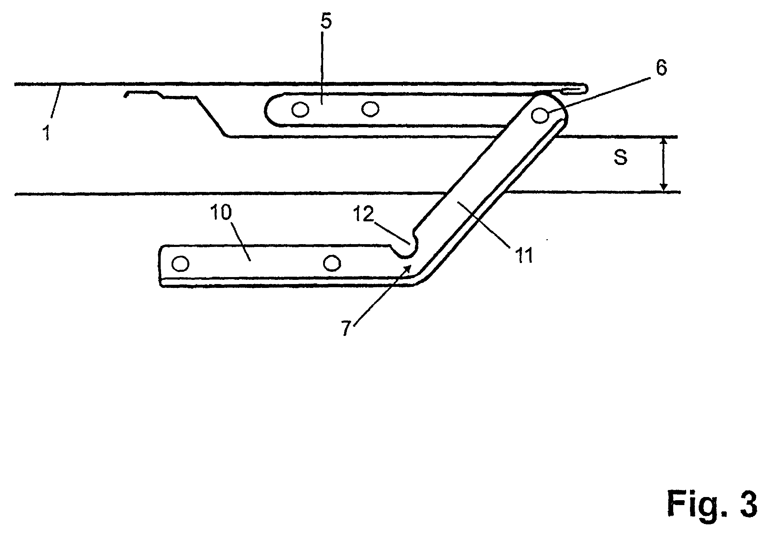

Bezugnehmend auf Fig. 3 wird eine einfachere Variante des Fronthaubenscharniers dargestellt, bei der eine Führungbahn für das Gelenk 6 nicht vorgesehen ist. Dieselben Bezugszeichen wie in den Fig. 1 und 2 bezeichnen hierbei im wesentlichen dieselben Teile. Dieses Ausführungsbeispiel eignet sich insbesondere bei Anordnungen der Fronthaube 1 an nachgiebigen Haubenschlössern 3, die insbesondere eine Verschiebung der Fronthaube 1 nach hinten in einem bestimmten Umfang zulassen und hierdurch Energie absorbieren, wodurch sich der Schwenkradius ebenfalls verschiebt.

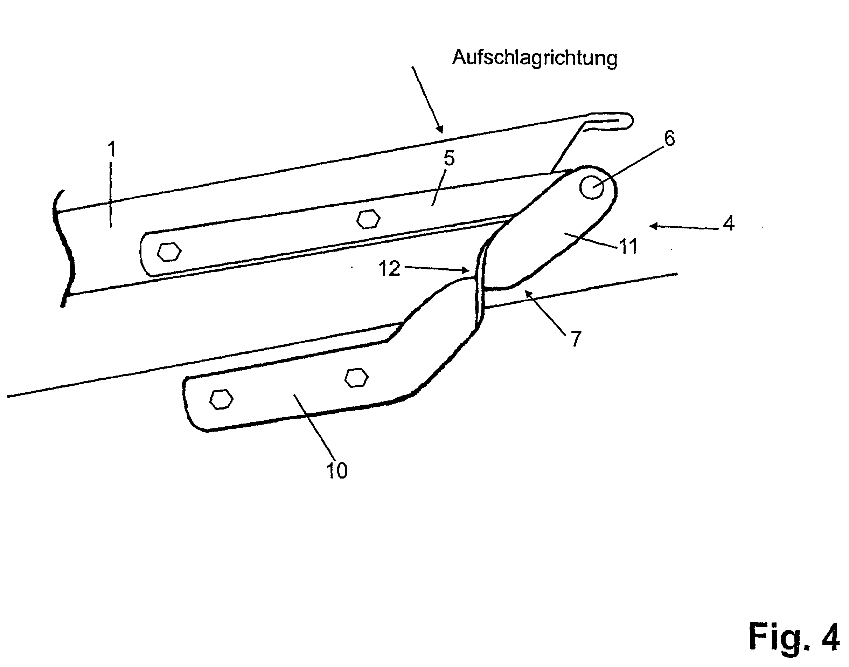

Fig. 4 zeigt ein weiteres Ausführungsbeispiel eines Frontdeckelscharniers, bei dem der ansonsten flach ausgebildete Schenkel 11 einmal um 180° verdreht worden ist, wodurch sein Widerstandsmoment bei Biegebeanspruchung herabgesetzt ist. Vorteil dieser Anordnung ist im wesentlichen die vollständig erhalten gebliebene Festigkeit in Bezug auf Zugbeanspruchung, die beispielsweise bei einem frontalen Zusammenstoß des Kraftfahrzeugs für die Insassensicherheit erheblich ist.

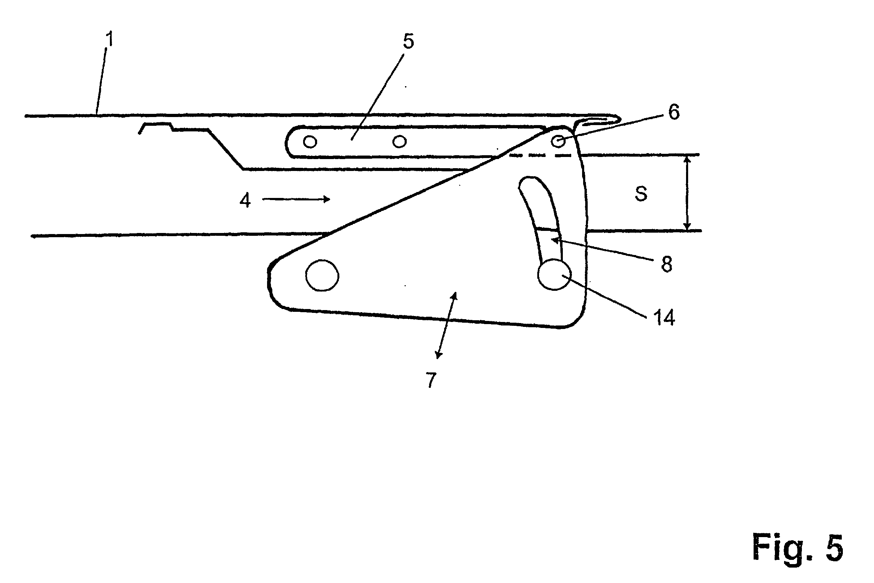

Fig. 5 zeigt eine weitere Alternative eines Fronthaubenscharniers, bei der das Gelenk 6 fest mit dem an dem Längsträger angeordneten Teil 7 des Scharniers 4 verbunden ist, dieser plattenförmige Teil 7 jedoch selbst eine Führung 8 aufweist, die in der Art eines gebogenen Langlochs dem Schwenkradius um das Haubenschloß 3 Rechnung trägt. Eine an dem Längsträger vorgesehene Verschraubung 14 definiert mit dem Teil 7 einen festen Reibschluß, wobei der Schaft der Verschraubung 14 die Führung 8 durchsetzt. Die Führung 8 kann sich allmählich verengend ausgebildet sein, so daß bei Verlagerung des Scharnierteils 7 nach unten in Reaktion auf den Aufprall eines menschlichen Körpers die aufzubringende Deformationsenergie mit fortschreitendem Verlagerungsweg allmählich zunimmt. Ebenso kann der Körper des Plattenteils 7 leicht keilförmig ausgebildet sein, so daß auch diesbezüglich eine zunehmende Energie zur Vollendung der Deformation erforderlich ist.

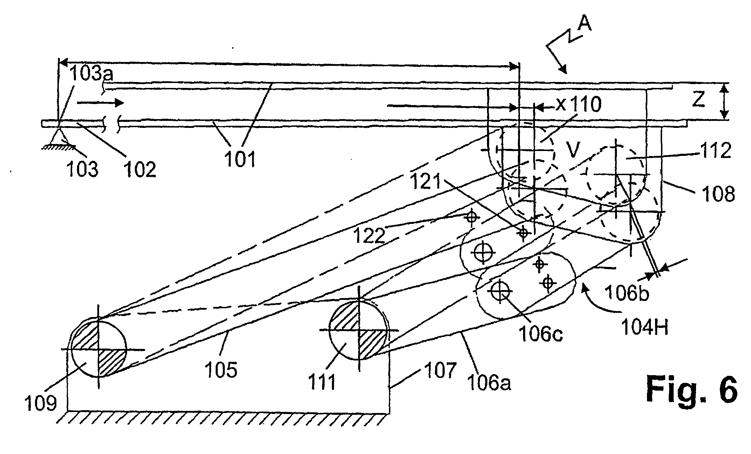

In Fig. 6 ist eine weitere bevorzugte Ausführungsform eines Scharniers 104 gezeigt. Das Scharnier 104 ist vorliegend als Viergelenk-Scharnier ausgebildet, das aus einem längeren Lenker 105 und einem kürzeren Lenker 106 besteht, deren Gelenke an ein am Rahmen befestigten Teil 107 bzw. an einer an der Fronthaube 101 angeordnetes Teil 108 schwenkbar angelenkt sind. Die Fronthaube 101 läßt sich aus der in Fig. 1 dargestellten Schließstellung durch Verschwenken um die Gelenke am Rahmenteil 107 in seine Öffnungsstellung und wieder zurück verschwenken, wobei die Drehgelenke des längeren Lenkers 105 mit 109 und 110 bezeichnet sind und die Drehgelenke des kürzeren Lenkers 106 mit 111 und 112 bezeichnet sind. Man erkennt, daß die Gelenke 109 bis 112 alle vier fest in dem zugeordneten Rahmenteil 107 bzw. Fronthaubenteil 108 angeordnet sind.

Während der längere Lenker 105 als starrer Lenker ausgebildet ist, ist der kürzere Lenker 106 als zweiteilbarer Lenker ausgebildet, der aus einem ersten, dem Rahmenteil 107 zugeordneten Teillenker 106a und einem zweiten, dem Haubenteil 108 zugeordneten Teillenker 106b besteht. Die Teillenker 106a, 106b sind über ein beispielsweise als Nietung ausgeführtes Gelenk 106c gelenkig miteinander verbunden und definieren einen Drehgelenk. Die beiden Teillenker 106a, 106b sind an einer Drehung um das Gelenk 106c durch eine starre Verbindung mittels eines als abscherbaren Bolzen ausgebildeten Verriegelungsglieds 121 miteinander verbunden. Somit verhält sich der aus den Teillenkern 106a, 106b zusammengesetzte Lenker 106 wie ein starrer Lenker 106, solange sich das Vierglenk-Scharnier 104 in seiner Schließstellung oder in seiner Öffnungsstellung befindet. Durch ein Abscheren des Bolzens 121 wird der kürzere Lenker 106 in die Lage versetzt, um das Gelenk 106c zu schwenken, wodurch die Bestimmung der Schwenkbahn der Fronthaube 101 aufgrund des Viergelenk-Scharniers 104 aufhebbar ist, und insbesondere der durch einen starren Lenker 106 definierte Abstand der Achsen der Gelenke 111, 112 bezüglich des dann zwischen diesen beiden Achsen wirksamen Lenkers veränderlich wird.

In Fig. 6 ist mit 122 ferner ein Anschlag bezeichnet, der an dem Haubenteil 108 angeordnet ist, so daß dieser beim Schließen der Fronthaube 101 den kurzen Lenker 106 gegen die Haubenbefestigung vorspannt. Hieraus folgt vorteilhaft eine eindeutige Positionierung der Haubenecken zur A-Säule hin. Der Anschlag 122 ist vorteilhaft einstellbar, um Toleranzen der Karosserie sowie der Fertigung des Scharniers 104 gerecht werden. Der Anschlag 122 dient insbesondere aber dazu, im Überlastfall den Aufprallimpuls auf den Abscherbolzen 121 zu übertragen. Alternativ ist es möglich, den Anschlag 122 an der Karosserie anzuordnen.

Ein Teil des Eigengewichts der Fronthaube 101 lastet in der Öffnungsstellung des Viergelenk-Scharniers 14 auf dem kürzeren Lenker 106, der unter dieser Last zur Vermeidung einer Schwenk-Kippbewegung der Fronthaube 101 nicht ausknicken soll. Der Abscherbolzen 121 sowie gegebenenfalls weitere Anschläge dienen dazu, das Ausknicken des kurzen Lenkers 106 um die Vernietung 106c zu unterbinden. Sowohl in der Schließstellung als auch in der Öffnungsstellung bleibt die Länge und Beschaffenheit des kürzeren Lenkers 106 im wesentlichen unverändert.

In Fig. 6 ist der Überlastfall aufgrund eines Fußgängeraufpralls auf die Fronthaube 101 und die sich hieraus ergebende Deformation des Viergelenk-Scharniers 104 insgesamt und insbesondere des kürzeren Lenkers 106 näher dargestellt. Gestrichelt ist in Fig. 6 die Schließstellung S dargestellt, während in durchgezogener Linie die Überlaststellung H aufgrund eines schematisch mit Pfeil A angedeuteten Aufpralls eines Fußgängers dargestellt ist. In Fig. 6 ist zudem schematisch das Haubenschloß 103 dargestellt, welches, wie in der schematischen Darstellung zu erkennen, verschieblich an der Karosserie angeordnet ist, um eine horizontale Verlagerung der Fronthaube 101, die einhergeht mit einem Verschwenken der Fronthaube 101 um die in dem Haubenschloß gebildete, mit 103a bezeichnete, Achse zu ermöglichen. Man erkennt, daß die Fronthaube 101 im Bereich des an diese angeschlagenen Haubenteils 108 einen Verlagerungsweg v ausführt, der mit dem Pfeil, der an der Achse des Drehgelenks 110 angetragen ist, illustriert ist. Der Weg v setzt sich aus einer horizontalen Komponente x und einer vertikalen Komponente z zusammen, die in Fig. 6 ebenfalls angetragen sind. Man erkennt also, daß bei Aufprall eines Fußgängers die Fronthaube sich um den Betrag z senkt und entsprechend ihren Abstand zu den gegebenenfalls harten und damit verletzungsgefährdenden Teilen im Motorraum verringert, während zugleich die Fronthaube 101 und damit auch das Haubenschloß 103 sich um den Betrag x, in Fahrtrichtung gesehen nach hinten, verlagert. Wäre der kürzere Lenker 106 ebenso wie der längere Lenker 105 starr ausgebildet, könnte die Verlagerungsbewegung durch das Viergelenk-Scharnier 104 nicht vollzogen werden, da die Vier Gelenke 109 bis 112 nur einen Schwenkweg, nämlich den, der für die Öffnungsbewegung der Fronthaube 101 zugrundegelegt wird, definieren und die Verlagerungsbewegung somit statisch überbestimmt wäre. Aufgrund der zweiteilbaren Ausbildung des kürzeren Lenkers 106 wird die statische Überbestimmung des Viergelenks 104 aufgehoben und die Umwandlung der Aufprallenergie eines Fußgängeraufpralls auf die Fronthaube 101 wird in die entsprechende Deformationsenergie (sowie in weitere, den Aufprall aus anderen Gründen abmildernde Energien) umgewandelt. Die Lageänderung der Achse des Gelenks 112 des kürzeren Lenkers 106 ist in Fig. 6 mit d bezeichnet. Man erkennt, daß für eine relativ bedeutsame vertikale Verlagerung eine geringe wirksame Verlängerung des kürzeren Lenkers 106 ausreicht. Man erkennt ferner, daß durch die Zweiteilung des kürzeren Lenkers 106 die beiden Lenker 105 und 106 ihre wirksame Winkellage zueinander geringfügig geändert haben, die sonst statisch das Viergelenk 4 bestimmt.

Unter der Last eines Fußgängeraufpralls schert der Bolzen 121 aufgrund des durch den Anschlag 122 übertragenen Impulses ab und das Drehgelenk 106c wird frei gegeben, wobei aufgrund der hierdurch resultierende Unterbestimmung des Viergelenk-Scharniers 104 die Fronthaube 101 nicht mehr in ihrer Schließstellung gehalten ist, sondern in Richtung auf ihre Überlaststellung durchfällt. Die Aufprallenergie wird hierbei in die Abscherenergie für den Bolzen 121 umgewandelt, so daß das faktische Ausknicken des kürzeren Lenkers 106 durch die Schwenkbewegung um das Drehgelenk 106c zugleich mit einer Energieumwandlung der Aufprallenergie und damit einer Dämpfung des Aufschlags einhergeht. Die Anordnung der beiden Teillenker 106a, 106b sowie des Abscherbolzens 121 ist dabei derart ausgewählt, daß der Überstand des unteren Teillenkers 106a über das Hilfsgelenk 106c nicht in den Verlagerungsweg der Fronthaube 101 hinein ragt und dort einen harten Gegenstand darstellt, an dem sich ein Fußgänger verletzen könnte, vielmehr wird der Überstand aus der Verlagerungszone der Fronthaube 101 vorteilhaft ferngehalten. So ist es insbesondere vorzugsweise möglich, eine Drehfeder um das Gelenk 106 anzuordnen, deren eines Ende gegen den Teillenker 106a und das andere Ende gegen den Teillenker 106b vorgespannt ist, und die in Richtung auf ein Durchfallen des Viergelenk-Scharniers 104 spannbar ist, um einen Fußgängeraufprall abzumildern, jedoch in ihrer Spannrichtung durch Endanschläge an einer über die ausgefluchteten Lage der beiden Teillenker 106a, 106b hinausgehenden Verschwenkung gehindert ist. In diesem Zusammenhang ist anzumerken, daß die idealtypische Darstellung der Lenker 105, 106 als gerade Lenker die am einfachsten realisierbare Ausführungsform betrifft, es aber gleichwohl möglich ist, die Lenker 105, 106 gekrümmt auszubilden, wobei die ideellen Lenker mit den Achsen der Lenker 105, 106 wie im Ausführungsbeispiel beschrieben zusammenfallen würden.

Es versteht sich, daß auch beide Lenker 105, 106 in der vorstehenden Weise zweiteilbar ausgebildet sein können, wobei im Falle von für jeden der beiden Lenker 105, 106 vorgesehenen Zwischengelenken wie demjenigen 106c nach der plastischen Formänderung z.B. durch Abscheren eines Scherbolzens das Viergelenk 104 zu einem Doppleviergelenk wird.

Es ist zu verstehen, daß anstelle des Bolzens 121 auch andere, auch größere Teile vorgesehen werden können, die aufgrund einer plastischen Formänderung mit dem Abscheren oder aufgrund einer zusätzlichen elastischen Formänderung, beispielsweise ihrer Ausbildung als Feder, größere Energiemengen speichern bzw. verbrauchen können. Hierbei ist es insbesondere nicht erforderlich, daß die beiden Teillenker 106a, 106b über ein Gelenk miteinander verbunden sind. So kann man in einfacher Weise zwei separate Teillenker über eine zerreißbare Verbindung wie einer Ummantelung z.B. aus einem Kunststoff wie Polyurethan miteinander zu einem starren Lenker 106 verbinden, wobei ein Fußgängeraufprall durch plastische Formänderung die Ummantelung zerreißt und die beiden Teillenker 106a, 106b freigibt, so daß das Viergelenk 104 aufgehoben ist.

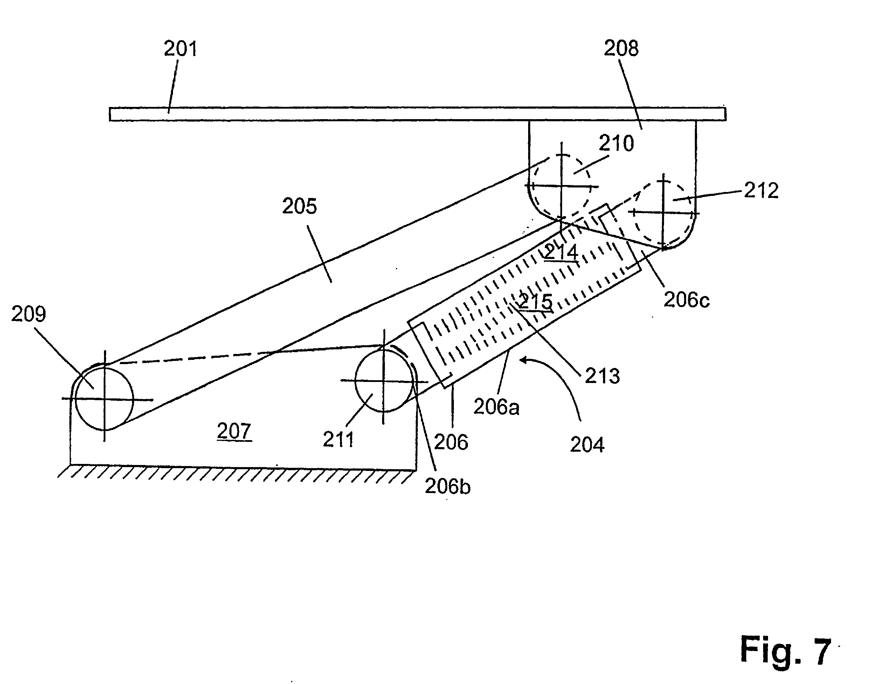

In Fig. 7 ist noch eine weitere bevorzugte Ausführungsform eines Scharniers 204 gezeigt. Das Scharnier 204 ist ebenfalls als Viergelenk-Scharnier ausgebildet, das aus einem längeren Lenker 205 und einem kürzeren Lenker 206 besteht, deren Gelenke an ein am Rahmen befestigten Teil 207 bzw. an einer an der Fronthaube 201 angeordnetes Teil 208 schwenkbar angelenkt sind. Die Fronthaube 201 läßt sich aus der in Fig. 7 dargestellten Schließstellung durch Verschwenken um die Gelenke am Rahmenteil 207 in seine Öffnungsstellung und wieder zurück verschwenken, um den Zugang zur Motorhaube zu ermöglichen. Die Drehgelenke des längeren Lenkers 205 sind mit 209 und 210 bezeichnet, und die Drehgelenke des kürzeren Lenkers 206 sind mit 211 und 212 bezeichnet sind. Man erkennt, daß die Gelenke 209 bis 212 alle vier fest in dem zugeordneten Rahmenteil 207 bzw. Fronthaubenteile 208 angeordnet sind.

Während der längere Lenker 205 als starrer Lenker ausgebildet ist, ist der kürzere Lenker 206 in einem zentralen Bereich 206a, an den sich die die Gewerbe der Drehgelenke 211, 212 aufweisenden Endstücke 206b bzw. 206c anschließen, mit einem als Deformiereinheit ausgebildeten Energiespeicher 213 ausgestattet, der eine bleibende Veränderung der Länge des kürzeren Lenkers 206 dergestalt zuläßt, daß der Abstand der Achsen der Drehlenke 211 und 212 veränderlich ist. Hierzu ist der plastisch deformierbar ausgebildete Energiespeicher 213 unter Überwindung seiner Vorspannung zu belasten, wobei die Last derart ausgelegt ist, daß sie das Eigengewicht der an dem Haubenteil 208 angeordneten Fronthaube 201 nennenswert übersteigen muß.

Ein Fußgängeraufprall erzeugt eine Verlängerung des Lenkers 206 durch Expansion des Widerstands 213 aufgrund plastischer Formänderung. Hierbei können sowohl metallische Teile als auch Kunststoffteile bleibend expandiert bzw. elongiert werden, wobei die zur Formänderung erforderliche Energie den Aufprall abmildert.

Neben einer zusätzlichen Druckfeder 214 ist in dem Abschnitt 206a des kürzeren Lenkers 206 auch eine zusätzliche Zugfeder 215 integriert, so daß der voreingestellte Abstand der Achsen der Drehgelenke 211, 212 von der im unbelasteten Zustand wiedergegebenen Länge des kürzeren Lenkers 206 eingehalten ist. Ein Teil des Eigengewichts der Fronthaube 201 in der Öffnungsstellung des Viergelenk-Scharniers 204 lastet auf dem kürzeren Lenker 206, der unter dieser Last zur Vermeidung einer Schwenk-Kipp-Bewegung der Fronthaube 201 nur unwesentlich nachgeben soll. Die Druckfeder 214 und die Zugfeder 215 sind in Fig. 7 schematisch dargestellt und dienen in dieser schematischen Darstellung lediglich der Illustration der unterschiedlichen entlasteten bzw. belasteten Zustände des Viergelenk-Scharniers 204.

Es ist zu verstehen, daß auch hier beide Lenker 205, 206 längenveränderbar ausgebildet sein können. Hierbei kann neben einer Verlängerung auch eine Stauchung der Lenker durch plastische Formänderung vorgesehen sein.

Die Erfindung ist vorstehend anhand mehrerer Ausführungsbeispiele näher erläutert worden, wobei das allgemeine Funktionsprinzip einer zumindest lokal bleibenden Formänderung im Bereich des Scharniers, an dem die Fronthaube 1 angelenkt ist, gemein ist. Es versteht sich, daß die einzelnen Maßnahmen der Ausführungsbeispiele auch miteinander zum Erzielen eines besseren Erfolgs kombiniert werden können. Insbesondere ist die Erfindung nicht auf die beschriebenen Beispiele von Scharnieren beschränkt, sondern kann in Kombination mit allen bekannten Klappenscharnieren für Fronthauben oder Heckdeckel eingesetzt werden.

## Patentansprüche

1. Fronthaubenanordnung, bei der eine Fronthaube (1) eines Fahrzeugs über ein Scharnier (4) an dem Rahmen des Fahrzeugs angelenkt ist, welche Fronthaube (1) ferner über wenigstens ein Haubenschloß (3) verschließbar ist, wobei das Scharnier (4) bei Aufprall eines Fußgängers eine plastische Formänderung ausführt, wobei das Scharnier (4) wenigstens ein die Schwenkachse der Fronthaube (1) definierendes Gelenk (6; 109-112; 209-212) aufweist,
**dadurch gekennzeichnet,**
**daß** das wenigstens eine Gelenk (6; 110, 112; 210, 212) in einem vorbestimmten Radius verlagert wird, der durch den Abstand des Gelenks (6; 110, 112; 210, 212) von dem Haubenschloß (3) definiert ist.

2. Fronthaubenanordnung nach Anspruch 1, **dadurch gekennzeichnet, daß** ein Teil (11) des Scharniers (4) gegenüber einem anderen Teil (10) desselben Scharniers (4) durch plastische Änderung entlang einer Sollbiegelinie (12) gespreizt wird.

3. Fronthaubenanordnung nach Anspruch 2, **dadurch gekennzeichnet, daß** entsprechend der Verschiebung des ersten Teils (11) eine Führung des Gelenks (6) in einer in dem Teil (11) vorgesehenen Führungsbahn (8) erfolgt.

4. Fronthaubenanordnung nach Anspruch 3, **dadurch gekennzeichnet, daß** Rastmittel (9) in der Führungsbahn (8) angeordnet sind, die das Gelenk (6) bei der Verlagerung in der Führungsbahn (8) bremsen.

5. Fronthaubenanordnung nach einem der Ansprüche 2 bis 4, **dadurch gekennzeichnet, daß** das erste Teil (11) um bis zu 45° von dem zweiten Teil (10) abgespreizt wird.

6. Fronthaubenanordnung nach einem der Ansprüche 1 bis 5, **dadurch gekennzeichnet, daß** ein Teil des Scharniers (4) in der Art eines Flacheisens ausgebildet ist, das um 180° verdreht ist.

7. Fronthaubenanordnung nach Anspruch 1, **dadurch gekennzeichnet, daß** das an dem Rahmen befestigte Teil (7) des Scharniers (4) um eine horizontale Achse schwenkbar an dem Rahmen angeordnet ist, und daß bei Aufprall auf die Fronthaube (1) das Teil (7) um die horizontale Achse nach unten verlagert wird.

8. Fronthaubenanordnung nach Anspruch 7, **dadurch gekennzeichnet, daß** eine Führungsbahn (8) in dem Teil (7) ausgebildet ist, die von einer Verschraubung (14) durchsetzt wird, wobei durch Relativbewegung zwischen Verschraubung (14) und Teil (7) eine Aufweitung der Führungsbahn (8) oder eine Flächenpressung des Teils (7) erfolgt.

9. Fronthaubenanordnung nach einem der Ansprüche 1 bis 8, **dadurch gekennzeichnet, daß** das Scharnier je ein Anschlagteil (5, 7) für Fronthaube (1) und Karosserie des Fahrzeugs umfaßt, und daß die beiden Anschlagteile über ein einziges Gelenk als Eingelenkscharnier miteinander verbunden sind.

10. Fronthaubenanodnung nach einem der Ansprüche 1 bis 8 **dadurch gekennzeichnet, daß** das Scharnier je ein Anschlagteil (108, 107; 208, 207) für Fronthaube (1) und Karosserie des Fahrzeugs umfaßt, und daß die beiden Anschlagteile jeweils über ein Gelenk über wenigstens einen Lenker (106; 206) des Mehrgelenkscharniers miteinander verbunden sind.

11. Fronthaubenanordnung nach Anspruch 10, **dadurch gekennzeichnet, daß** das Mehrgelenkscharnier als Viergelenkscharnier ausgebildet ist.

12. Fronthaubenanordnung nach Anspruch 10 oder 11, **dadurch gekennzeichnet, daß** der wenigstens eine Lenker (106; 206) eine plastische Formänderung ausführt.

13. Fronthaubenanordnung nach Anspruch 12, **dadurch gekennzeichnet, daß** die plastische Formänderung eine starre Verbindung zweier Teillenker (106a, 106b), die der wenigstens eine Lenker (106) umfaßt, aufhebt.

14. Fronthaubenanordnung nach Anspruch 12 oder 13, **dadurch gekennzeichnet, daß** der wenigstens eine Lenker (206) längenveränderbar ausgebildet ist.

15. Fronthaubenanordnung nach einem der Ansprüche 9 bis 14, **dadurch gekennzeichnet, daß** das karosserieseitige Anschlagteil eine plastische Formänderung ausführt.

16. Fronthaubenanordnung nach einem der Ansprüche 1 bis 15, **dadurch gekennzeichnet, daß** durch die plastische Formänderung die Fronthaube (1) aus einer dauerhaft angehobenen Lage in eine dieser gegenüber abgesenkten Lage verlagerbar ist.

17. Fronthaubenanordnung nach einem der Ansprüche 1 bis 15, **dadurch gekennzeichnet, daß** die Scharniere bei Detektieren eines Fußgängeraufpralls in eine angehobene Lage verlagerbar sind.

18. Fronthaubenanordnung nach einem der Ansprüche 1 bis 17, **dadurch gekennzeichnet, daß** das Haubenschloß (3) bei einem Fußgängeraufprall eine auf die Lageänderung der Scharniere abgestimmte Lageänderung vorsieht.

## Claims

1. A front-hood arrangement, wherein a front hood (1) of a vehicle is coupled via a hinge (4) to the frame of the vehicle, which front hood (1) can also be closed by means of at least one hood lock (3), wherein in the event of an impact of a pedestrian, the hinge (4) undergoes a plastic deformation, wherein the hinge (4) comprises at least one link (6; 109-112; 209-212) which defines the pivot axis of the front hood (1),
**characterized in**
**that** said at least one link (6; 110, 112; 210, 212) is displaced over a predetermined radius which is defined by the distance of the link (6; 110, 112; 210, 212) from the hood lock (3).

2. The front-hood arrangement as claimed in claim 1, **characterized in that** one part (11) of the hinge (4) is spread with respect to another part (10) of the same hinge (4) through plastic change along a desired bending line (12).

3. The front-hood arrangement as claimed in claim 2, **characterized in that** guidance of the link (6) in a guide path (8) which is provided in the part (11) takes place in accordance with the displacement of the first part (11).

4. The front-hood arrangement as claimed in claim 3, **characterized in that** latching means (9) are arranged in the guide path (8), which means decelerate the link (6) during the displacement in the guide path (8).

5. The front-hood arrangement as claimed in one of claims 2 to 4, **characterized in that** the first part (11) is spread away from the second part (10) by up to 45°.

6. The front-hood arrangement as claimed in one of claims 1 to 5, **characterized in that** a part of the hinge (4) is designed in the form of a flat steel bar which is turned through 180°.

7. The front-hood arrangement as claimed in claim 1, **characterized in that** that part (7) of the hinge (4) which is attached to the frame is arranged on the frame in such a manner that it can pivot about a horizontal axis, and **in that** in the event of an impact on the front hood (1) the part (7) is displaced downward about the horizontal axis.

8. The front-hood arrangement as claimed in claim 7, **characterized in that** a guide path (8) is formed in the part (7), and a screw connection (14) passes through this guide path, relative movement between screw connection (14) and part (7) leading to widening of the guide path (8) or surface pressure on the part (7).

9. The front-hood arrangement as claimed in one of claims 1 to 8, **characterized in that** the hinge comprises in each case one stop part (5, 7) for front hood (1) and body of the vehicle, and **in that** the two stop parts are connected to one another via a single joint as a one-joint hinge.

10. The front-hood arrangement as claimed in one of claims 1 to 8, **characterized in that** the hinge comprises in each case one stop part (108, 107; 208, 207) for front hood (1) and body of the vehicle, and **in that** the two stop parts are connected to one another in each case by means of one joint via at least one link (106; 206) of the multiple-joint hinge.

11. The front-hood arrangement as claimed in claim 10, **characterized in that** the multiple-joint hinge is designed as a four-joint hinge.

12. The front-hood arrangement as claimed in claim 10 or 11, **characterized in that** the at least one link (106; 206) undergoes a plastic deformation.

13. The front-hood arrangement as claimed in claim 12, **characterized in that** the plastic deformation eliminates a rigid connection between two partial links (106a, 106b) which the at least one link (106) comprises.

14. The front-hood arrangement as claimed in claim 12 or 13, **characterized in that** the at least one link (206) is designed to be of variable length.

15. The front-hood arrangement as claimed in one of claims 9 to 14, **characterized in that** the body-side stop part undergoes a plastic deformation.

16. The front-hood arrangement as claimed in one of claims 1 to 15, **characterized in that** as a result of the plastic deformation the front hood (1) can be displaced out of a permanently raised position into a position which is lowered with respect to the previous position.

17. The front-hood arrangement as claimed in one of claims 1 to 15, **characterized in that**, when a pedestrian impact is detected, the hinges can be displaced into a raised position.

18. The front-hood arrangement as claimed in one of claims 1 to 17, **characterized in that** the hood lock (3), in the event of a pedestrian impact, provides a change in position which is adapted to the change in position of the hinges.

## Revendications

1. Ensemble de capot avant dans lequel un capot avant (1) d'un véhicule est articulé sur le châssis du véhicule au moyen d'une charnière (4), lequel capot avant (1) peut en outre être verrouillé au moyen d'au moins une serrure de capot (3), la charnière (4) subissant en cas de collision avec un piéton une déformation plastique, la charnière (4) comportant au moins une articulation (6 ; 109-112 ; 209-212) définissant l'axe de pivotement du capot avant (1),
**caractérisé en ce**
**que** l'au moins une articulation (6; 110, 112 ; 210, 212) est déplacée suivant un rayon prédéterminé qui est défini par la distance entre l'articulation (6; 110, 112 ; 210, 212) et la serrure de capot (3).

2. Ensemble de capot avant selon la revendication 1, **caractérisé en ce qu'**une pièce (11) de la charnière (4) est écartée d'une autre pièce (10) de la même charnière (4) par déformation plastique le long d'une ligne prédéterminée de flexion (12).

3. Ensemble de capot avant selon la revendication 2, **caractérisée en ce que**, en fonction du déplacement de la première pièce (11), un guidage de l'articulation (6) est effectué dans une voie de guidage (8) prévue dans la pièce (11).

4. Ensemble de capot avant selon la revendication 3, **caractérisé en ce que** les moyens à cliquets sont agencés dans la voie de guidage (8), lesquels moyens à cliquets freinent l'articulation (6) lors du déplacement dans la voie de guidage (8).

5. Ensemble de capot avant selon l'une des revendications 2 à 4, **caractérisé en ce que** la première pièce (11) fait un angle pouvant atteindre 45 degrés avec la deuxième pièce (10).

6. Ensemble de capot avant selon l'une des revendications 1 à 5, **caractérisé en ce qu'**une pièce de la charnière (4) est conformée en acier plat qui est tordu à 180°.

7. Ensemble de capot avant selon la revendication 1, **caractérisé en ce que** la pièce (7), fixée au châssis, de la charnière (4) est disposée sur le châssis de façon à pouvoir pivoter autour d'un axe horizontal, et **en ce que** en cas de collision sur le capot avant (1) la pièce (7) est déplacée vers le bas autour de l'axe horizontal.

8. Ensemble de capot avant selon la revendication 7, **caractérisé en ce qu'**une voie de guidage (8) est conformée dans la pièce (7), laquelle voie de guidage est traversée par un agencement (14), un élargissement de la voie de guidage (8) ou une pression superficielle de la pièce (7) étant effectué par un mouvement relatif entre l'agencement (14) et la pièce (7).

9. Ensemble de capot avant selon l'une des revendications 1 à 8, **caractérisé en ce que** la charnière comporte une pièce de fixation (5, 7) pour le capot avant (1) et la carrosserie du véhicule respectivement, et **en ce que** les deux pièces de fixation sont reliées entre elles par une articulation unique formant une articulation simple.

10. Ensemble de capot avant selon l'une des revendications 1 à 8, **caractérisé en ce que** la charnière comporte une pièce de fixation (108, 107 ; 208, 207) pour le capot avant (1) et la carrosserie du véhicule respectivement, et **en ce que** les deux pièces de fixation sont reliées entre elles par une articulation via au moins un bras (106 ; 206) de la charnière à multiple articulations.

11. Ensemble de capot avant selon la revendication 10, **caractérisé en ce que** la charnière à multiple articulations est conformée en charnière à quadruple articulations.

12. Ensemble de capot avant selon la revendication 10 ou 11, **caractérisé en ce que** l'au moins un bras (106 ; 206) subit une déformation plastique.

13. Ensemble de capot avant selon la revendication 12, **caractérisé en ce que** la déformation plastique élimine une liaison rigide de deux bras secondaires (106a, 106b) que comporte l'au moins un bras (106).

14. Ensemble de capot avant selon la revendication 12, **caractérisé en ce que** l'au moins un bras (206) est conformé pour avoir une longueur variable.

15. Ensemble de capot avant selon l'une des revendications 9 à 14, **caractérisé en ce que** la pièce de fixation du côté de la carrosserie subit une déformation plastique.

16. Ensemble de capot avant selon l'une des revendications 1 à 15, **caractérisé en ce que** la déformation plastique permet de déplacer le capot avant (1) de la position soulevée permanente dans une position abaissée par rapport à la précédente.

17. Ensemble de capot avant selon l'une des revendications 1 à 15, **caractérisé en ce que** les charnières sont déplaçables dans une position soulevée lors de la détection d'une collision avec un piéton.

18. Ensemble de capot avant selon l'une des revendications 1 à 17, **caractérisé en ce que** la serrure de capot (3) prévoit une modification de position correspondant à la modification de position des charnières en cas de collision avec un piéton.
